**Europäisches Patentamt**

**European Patent Office**

**Office européen des brevets**

(19)

(11) Veröffentlichungsnummer: **0 312 798 B1**

(12) **EUROPÄISCHE PATENTSCHRIFT**

(45) Veröffentlichungstag der Patentschrift:
27.12.90

(21) Anmeldenummer: 88115649.1

(22) Anmeldetag: 23.09.88

(51) Int. Cl.⁵: **H04N 5/76**, H04N 5/04

(54) Verfahren zur Programmierung eines Emfängers mit Videorecorder zur Aufzeichnung von über Satellit übertragenen Fernseh-Programmbeiträgen.

(30) Priorität: 22.10.87 DE 3735780

(43) Veröffentlichungstag der Anmeldung:
26.04.89 Patentblatt 89/17

(45) Bekanntmachung des Hinweises auf die Patenterteilung:
27.12.90 Patentblatt 90/52

(84) Benannte Vertragsstaaten:
AT DE FR GB IT

(56) Entgegenhaltungen:
EP-A- 0 183 625
EP-A- 0 254 927

(73) Patentinhaber: GRUNDIG E.M.V. Elektro-Mechanische Versuchsanstalt Max Grundig holländ. Stiftung & Co. KG., Kurgartenstrasse 37, D-8510 Fürth/Bay.(DE)

(72) Erfinder: Hegendörfer, Max c/o Grundig E.M.V., Max Grundig holländ. Stiftung & Co KG, Kurgartenstrasse 37 D-8510 Fürth/Bay(DE)

**Beschreibung**

Die Erfindung betrifft ein Verfahren zur Programmierung eines Empfängers/Recorders zur Aufzeichnung von über Satellit übertragenen Fernseh-Programmbeiträgen mit den im Oberbegriff des Anspruch 1 angegebenen Merkmalen, wie es in der nicht vorveröffentlichten europäischen Patentanmeldung EP-A 0 254 927 beschrieben ist.

Über Satellit übertragene Fernseh-Programmbeiträge sind in der Regel gleichzeitig in verschiedenen Ländern empfangbar. Diese verschiedenen Länder können unter Umständen verschiedene Ortszeiten haben. Beispielsweise beträgt die Zeitverschiebung zwischen der Bundesrepublik Deutschland und England eine Stunde.

Aus der europäischen Patentanmeldung EP-A 0 183 625 ist es bereits bekannt, eine zusammen mit einem Satelliten-Fernsehsignal übertragene Programmvorschau anzuzeigen, wobei vor der Anzeige eine Umrechnung der in der Programmvorschau enthaltenen Anfangszeiten der Sendungen in eine andere Ortszeit erfolgt. Dabei wird die Ortszeit des Empfängers mittels eines Drehknopfes am Gehäuse des Empfängers festgelegt. Weiterhin wird ein Kennsignal für die Ortszeit des Senders zusammen mit dem Fernsehsignal vom Sender zum Empfänger übertragen.

Soll nun beispielsweise mittels eines in Deutschland aufgestellten Empfängers/Recorders, dessen Uhr auf die deutsche Ortszeit eingestellt ist, ein Programmbeitrag eines über Satellit sendenden englischen Senders automatisch aufgezeichnet werden, so muß der Benutzer die zwischen Deutschland und England bestehende Zeitverschiebung bei der Programmierung des Empfängers/Recorders berücksichtigen.

Dies ist jedoch umständlich und in der Praxis mit Schwierigkeiten verbunden, da mittels des Empfängers/Recorders eine Vielzahl von Fernseh-Programmbeiträgen unterschiedlicher Sender, die ihrerseits mehrere unterschiedliche Ortszeiten haben können, empfangbar ist und der Benutzer oft garnicht weiß, welche Ortszeit welchem Sender zugeordnet werden muß.

Hiervon ausgehend liegt der Erfindung die Aufgabe zugrunde, ein Verfahren der im Oberbegriff des Anspruchs 1 angegebenen Art derart weiterzubilden, daß die tatsächliche Einschalt- und Ausschaltzeit des Empfängers/Recorders zur Aufzeichnung eines gewünschten Programmbeitrages auch dann mit der Sendezeit des gewünschten Programmbeitrages übereinstimmt, wenn die Ortszeiten von Sender und Empfänger/Recorder voneinander abweichen.

Diese Aufgabe wird durch die im kennzeichnenden Teil des Anspruchs 1 angegebenen Merkmale gelöst. Vorteilhafte Ausgestaltungen der Erfindung ergeben sich aus den Unteransprüchen.

Die Vorteile der Erfindung bestehen insbesondere darin, daß der Benutzer bei der Programmierung des Empfängers/Recorders keinerlei Maßnahmen treffen muß, um sicherzustellen, daß die tatsächliche Einschalt- und Ausschaltzeit des Empfängers/Recorders mit der Sendezeit des gewünschten Programmbeitrages übereinstimmt, selbst wenn die Ortszeit des Senders und die Ortszeit des Empfängers voneinander abweichen.

Weitere vorteilhafte Eigenschaften der Erfindung ergeben sich anhand von Ausführungsbeispielen, welche im folgenden näher erläutert werden.

Im 1. Ausführungsbeispiel sei angenommen, daß ein die englische Ortszeit verwendender, seine Programmbeiträge über Satellit ausstrahlender Fernsehsender im Rahmen seines Videotextdienstes eine Programmvorschau ausschließlich auf seine eigenen Sendungen anbietet. Ein in Deutschland aufgestellter Empfänger/Recorder, dessen Uhr auf die deutsche Ortszeit, die sich von der englischen Ortszeit unterscheidet, eingestellt ist, wird zur Aufzeichnung eines gewünschten Programmbeitrages des genannten Senders wie folgt programmiert:

Der Benutzer schaltet z. B. mittels eines Fernbedienungsgebers das gewünschte Programm ein und ruft die Videotextseite auf, die die Programmvorschau enthält. Diese Videotextseite wird dann auf dem Bildschirm des an den Videorecorder angeschlossenen Fernsehempfängers dargestellt. Mittels eines Cursors wird der gewünschte Programmbeitrag angewählt. Durch Betätigung einer Übernahmetaste wird dem Recorder mitgeteilt, daß der momentan angewählte Programmbeitrag aufgezeichnet werden soll. Die zu dieser Aufzeichnung notwendigen Daten (Programmnummer, Datum, Einschalt- und Ausschaltzeit) werden automatisch der Videotextseite entnommen.

Darüberhinaus enthält jede Videotextseite des Senders die momentane Uhrzeit des Senders. Diese Uhrzeit wird beim vorliegenden Ausführungsbeispiel als Ortszeit des Senders bzw. als Kennsignal verwendet und im Empfänger mit der Ortszeit des Empfängers verglichen. Dieser Vergleich liefert ein Fehlersignal, welches ein Maß für die Zeitverschiebung zwischen der Ortszeit des Senders und der Ortszeit des Empfängers/Recorders darstellt. Dieses Fehlersignal wird verwendet, um die aus der Videotextseite entnommenen Daten (insbesondere die Einschalt- und Ausschaltzeit) derart zu modifizieren, daß die tatsächliche Einschalt- und Ausschaltzeit des Videorecorders an die tatsächliche Sendezeit des aufzuzeichnenden Programmbeitrages angepaßt ist. Die modifizierten Daten werden im Programmierspeicher des Recorders abgelegt.

Im zweiten Ausführungsbeispiel sei angenommen, daß ein die deutsche Ortszeit verwendender erster Fernsehsender im Rahmen seines Videotextdienstes eine Programmvorschau auf seine eigenen Sendungen und auf Sendungen eines zweiten Senders, der die englische Ortszeit verwendet, anbietet. Diejenige(n) Videotextseite(n), die die Programmvorschau auf die eigenen Sendungen des ersten Senders enthalten, enthält (enthalten) ferner ein (erstes) Kennsignal für die Ortszeit des ersten Senders. Diejenige(n) Videotextseite(n), die die Programmvorschau auf die Sendungen des zweiten Senders enthält (enthalten), enthält (enthalten) ferner ein (zweites) Kennsignal für die Ortszeit des zweiten Senders. Diese Kennsignale können beispielsweise in Form von bisher nicht benutzten Steuerbits in der Seitenüberschrift der Videotextseite enthalten sein, oder es wird die momentane Uhrzeit verwendet, sofern diese der Ortszeit des zweiten Senders entspricht.

Die Programmierung des Videorecorders zur Aufzeichnung eines gewünschten Programmbeitrages vom zweiten Sender geschieht wie folgt:

Der Benutzer schaltet z. B. mittels eines Fernbedienungsgebers das gewünschte Programm des ersten Fernsehsenders ein und ruft die Videotextseite auf, die die Programmvorschau auf die Sendungen des zweiten Senders enthält. Diese Videotextseite wird dann auf dem Bildschirm des an den Videorecorder angeschlossenen Fernsehempfängers dargestellt. Mittels eines Cursors wird der gewünschte Programmbeitrag angewählt. Durch Betätigung einer Übernahmetaste wird dem Recorder mitgeteilt, daß der momentan angewählte Programmbeitrag aufgezeichnet werden soll. Die zu dieser Aufzeichnung notwendigen Daten (Programmnummer, Datum, Einschalt- und Ausschaltzeit) werden automatisch der Videotextseite entnommen.

Darüberhinaus enthält die zur Programmierung des Empfängers/Videorecorders verwendete Videotextseite des ersten Senders - wie es bereits oben beschrieben wurde - ein Kennsignal für die Ortszeit des Senders des gewünschten Programmbeitrages (d.h. des zweiten Senders). Dieses Kennsignal wird mit einem Kennsignal für die Ortszeit oder der Ortszeit selbst des Empfängers/Recorders verglichen. Dieser Vergleich liefert ein Fehlersignal, welches ein Maß für die Zeitverschiebung zwischen der Ortszeit des Senders des gewünschten Programmbeitrages und der Ortszeit des Empfängers darstellt. Das erhaltene Fehlersignal wird verwendet, um die aus der Videotextseite entnommenen Daten derart zu modifizieren, daß die tatsächliche Einschalt- und Ausschaltzeit des Videorecorders an die tatsächliche Sendezeit des aufzuzeichnenden Programmbeitrages angepaßt ist. Die modifizierten Daten werden dann im Programmspeicher des Empfängers/Recorders abgelegt.

Im dritten Ausführungsbeispiel sei angenommen, daß ein in Deutschland aufgestellter Empfänger/Recorder, dessen Uhr auf die deutsche Ortszeit eingestellt ist, zur Aufzeichnung eines Programmbeitrages eines über Satellit ausstrahlenden englischen Fernsehsenders programmiert werden soll. Diese Programmierung soll im Unterschied zum ersten und zweiten Ausführungsbeispiel nicht durch Auswertung einer im Rahmen eines Videotextdienstes angebotenen Programmvorschau erfolgen, beispielsweise weil der Sender keinen Videotextdienst anbietet. Bei diesem Ausführungsbeispiel wird vom Sender zum Empfänger ein VPS-Signal zur programmsynchronen Aufzeichnungssteuerung des Empfangsgerätes übertragen, wie es beispielsweise aus "Valvo TI 861107 VPS Video-Programm-System mit SAA 5235 und SAF 1135" bekannt ist. Dieses VPS-Signal, welches in der Zeile 16 der vertikalen Austastlücke des Fernsehsignals übertragen wird, soll nach dem dritten Ausführungsbeispiel der Erfindung das Kennsignal für die Ortszeit des Senders, beispielsweise in Form eines oder mehrerer Kennbits oder in Form der mitübertragenen Ortszeiten enthalten. Die Programmierung des Videorecorders zur Aufzeichnung eins gewünschten Programmbeitrages geschieht dann wie folgt:

Der Benutzer entnimmt einer Programmzeitung die zur Programmierung notwendigen Daten der gewünschten Sendung, die mit der Ortszeit des Senders (also nicht mit der tatsächlichen Sendezeit) übereinstimmen, und programmiert seinen Empfänger/Recorder mit Hilfe der dafür vorgesehenen Tastatur auf der Fern- oder Nahbedienung des Empfängers/Recorders. Nach dem Abschluß der Programmierung bis zum Beginn der Aufzeichnung "lauert" der Empfänger/Recorder in Bereitschaftsstellung. Während dieser Zeit wird im Empfänger/Recorder durch Vergleich des aus der Zeile 16 des Fernsehsignals enthaltenen Kennsignals für die Ortszeit des Senders mit einem Kennsignal für die Ortszeit des Empfängers/Recorders ein Fehlersignal ermittelt. Auch in diesem Fall wird das erhaltene Fehlersignal dahingehend verwendet, daß die programmierte Ein- und Ausschaltzeit des Empfängers/Recorders an die tatsächliche Sendezeit der Sendung angepaßt ist.

## Patentansprüche

1. Verfahren zur Programmierung eines Empfängers mit Videorecorder zur Aufzeichnung von über Satellit übertragenen Fernsehprogrammbeiträgen, mit folgenden Verfahrensschritten:
- Es wird unter Verwendung einer Bedientastatur die zur Aufzeichnung eines Programmbeitrages notwendige Ein- und Ausschaltzeit dem zu programmierenden Empfänger mitgeteilt,
- die Ein- und Ausschaltzeit wird in einem Speicher des Empfängers abgespeichert, dadurch gekennzeichnet, daß
- durch Vergleich eines im Fernsehsender erzeugten und zum Empfänger übertragenen Kennsignals für die Ortszeit des Senders mit einem von der Empfängeruhr abgeleiteten Kennsignal für die Ortszeit des Empfängers ein Fehlersignal ermittelt wird, und
- mittels dieses Fehlersignals, welches ein Maß für die Zeitverschiebung zwischen der Ortszeit des Senders des aufzuzeichnenden Programmbeitrages und der Ortszeit des Empfängers darstellt, die dem Empfänger mitgeteilte Ein- und Ausschaltzeit an die tatsächliche Sendezeit des aufzuzeichnenden Programmbeitrages angepaßt wird.

2. Verfahren nach Anspruch 1, dadurch gekennzeichnet, daß
- ein Fernsehsender im Rahmen eines Videotextdienstes eine Programmvorschau ausschließlich auf seine eigenen Sendungen anbietet,
- die Programmierung des Empfängers/Recorders durch Auswertung der im Rahmen des Videotextdienstes angebotenen Programmvorschau erfolgt, und
- das Kennsignal für die Ortszeit des Fernsehsenders die im Rahmen des Videotextdienstes übertragene Uhrzeit des Senders ist.

3.Verfahren nach Anspruch 1, dadurch gekennzeichnet, daß
- ein erster Fernsehsender im Rahmen eines Videotextdienstes eine Programmvorschau auf seine eigenen Sendungen und auf Sendungen weiterer Sender anbietet, deren Ortszeit sich von der Ortszeit des ersten Senders unterscheidet,
- die Programmierung des Empfängers/Recorders durch Auswertung der im Rahmen des Videotextdienstes angebotenen Programmvorschau erfolgt, und
- in jeder Videotextseite, die eine Programmvorschau enthält, ein Kennsignal für die Ortszeit des zugehörigen Senders übertragen wird.

4. Verfahren nach Anspruch 1, dadurch gekennzeichnet, daß
- in grundsätzlich bekannter Weise vom Sender zum Empfänger/Recorder ein VPS-Signal zur programmsynchronen Aufzeichnungssteuerung des Empfangsgerätes übertragen wird, und
- das Kennsignal für die Ortszeit des Senders Bestandteil des VPS-Signals ist.

**Revendications**

1. Procédé pour programmer un récepteur comportant un magnétoscope servant à enregistrer des séquences de programmes de télévision transmis par satellite, incluant les étapes opératoires suivantes:
— moyennant l'utilisation d'un clavier de commande, les instants de branchement et d'interruption, nécessaires pour l'enregistrement d'une séquence programmes, sont communiqués au récepteur devant être programmé,
— les instants de branchement et d'interruption sont mémorisés dans une mémoire du récepteur, caractérisé par le fait que
— on détermine un signal d'erreur au moyen de la comparaison d'un signal caractéristique, produit dans l'émetteur de télévision et envoyé au récepteur et indiquant l'heure locale de l'émetteur, à un signal caractéristique dérivé de l'horloge du récepteur et indicatif de l'heure locale du récepteur, et
— à l'aide de ce signal d'erreur, qui représente une mesure du décalage horaire entre l'heure locale de l'émetteur de la séquence programmes devant être enregistrée et l'heure locale du récepteur, on adapte les instants de branchement et d'interruption communiqués au récepteur, à la durée effective d'émission de la séquence de programme devant être enregistrée.

2. Procédé selon la revendication 1, caractérisé en ce que
— un émetteur de télévision propose, dans le cas d'un service de vidéotext, un ensemble de programmes exclusivement dans ses propres émissions,
— la programmation du récepteur/de l'enregistreur est réalisée au moyen de l'évaluation de l'ensemble de programmes offerts dans le cadre du service vidéotext, et
— le signal caractéristique indiquant l'heure locale de l'émetteur de télévision est l'heure de l'émetteur, transmise dans le cadre du service vidéotext.

3. Procédé selon la revendication 1, caractérisé en ce que
— dans le cadre d'un service vidéotext, un premier émetteur de télévision délivre un ensemble de programmes dans ses propres émissions et au cours d'émissions d'autres émetteurs, dont l'heure locale diffère de l'heure locale du premier émetteur,
— la programmation du récepteur/de l'enregistreur est réalisée au moyen d'une évaluation de l'ensemble de programmes offerts dans le cadre du service vidéotext, et
— un signal caractéristique indicatif de l'heure de l'émetteur associé est transmis dans chaque page du vidéotext, qui contient un ensemble de programmes.

4. Procédé selon la revendication 1, caractérisé en ce que
— un signal VPS servant à réaliser la commande d'enregistrement, synchrone avec le programme, de l'appareil récepteur est transmis d'une manière connue dans son principe, par l'émetteur au récepteur/à l'enregistreur, et
— le signal caractéristique de l'heure locale de l'émetteur fait partie du signal VPS.

**Claims**

1. Method for programming a receiver with video recorder for recording television program contributions transmitted via satellite, comprising the following method steps:
— the receiver to be programmed is informed of the switching-on and -off time necessary for recording a program contribution, using an operating keyboard,
— the switching-on and -off time is stored in a memory of the receiver, characterized in that
— an error signal is determined by comparing an identification signal for the local time of the transmitter, generated in the television transmitter and transmitted to the receiver, with an identification signal for the local time of the receiver, derived from the receiver clock, and
— by means of this error signal, which represents a measure of the displacement in time between the local time of the transmitter of the program contribution to be recorded and the local time of the receiver, the switching-on and -off time imparted to the receiver is adapted to the actual transmitting time of the program contribution to be recorded.

2. Method according to Claim 1, characterized in that
— a television transmitter offers a program preview exclusively of its own transmissions within the framework of a teletext service,
— the receiver/recorder is programmed by evaluation of the program preview offered within the framework of the teletext service, and
— the identification signal for the local time of the television transmitter is the clock time of the transmitter transmitted within the framework of the teletext service.

3. Method according to Claim 1, characterized in that

– a first television transmitter offers, within the framework of a teletext service, a program preview of its own transmissions and of transmissions of other transmitters, the local time of which differs from the local time of the first transmitter,

– the receiver/recorder is programmed by evaluation of the program preview offered within the framework of the teletext service, and

– in each teletext page containing a program preview, an identification signal of the local time of the associated transmitter is transmitted.

4. Method according to Claim 1, characterized in that

– a VPS signal for the program-synchronous recording control of the receiving set is transmitted in a basically known manner from the transmitter to the receiver/recorder, and

– the identification signal for the local time of the transmitter is a component of the VPS signal.